# FASCICULE DE BREVET EUROPEEN

(11) **EP 1 922 206 B1**
(45) Date de publication et mention de la délivrance du brevet: **08.10.2008**
(21) Numéro de dépôt: 06765648.8
(22) Date de dépôt: 18.08.2006
(51) Int. Cl.: B29C 49/78, B29C 49/18, B29C 49/16

(54) **PROCEDE DE SOUFFLAGE AU MOYEN D'UN GAZ D'UN EMBALLAGE ET DISPOSITIF DE MISE EN OEUVRE**
VERFAHREN ZUM GASBLASFORMEN EINER VERPACKUNG UND VORRICHTUNG ZU DESSEN DURCHFÜHRUNG
METHOD OF GAS BLOW FORMING PACKAGING AND DEVICE FOR IMPLEMENTING SAME

(30) Priorité: 23.08.2005 FR 0508681
(43) Date de publication de la demande: 21.05.2008
(73) Titulaire: Technoplan Engineering S.A., 1228 Plan-Les-Ouates (CH)
(72) Inventeur: JOVER, Daniel, CH-1197 Prangins (CH); STORIONE, Savino, CH-1290 Versoix (CH)
(74) Mandataire: Bugnion Genève
(86) Numéro de dépôt international: PCT/IB2006/002250
(87) Numéro de publication internationale: WO 2007/023349

(56) Documents cités:
- EP-A- 1 518 658
- WO-A-03/009993
- WO-A-20/05092594
- WO-A-20/05097466

## Description

La présente invention concerne un procédé de soufflage au moyen d'un gaz d'un emballage, comme une bouteille, dans un moule à partir d'une préforme et de récupération du gaz de soufflage pour sa réutilisation ainsi qu'un dispositif pour la mise en oeuvre du procédé.

La présente invention concerne également un dispositif de soufflage d'emballages, en particulier de bouteilles, à partir d'une préforme au moyen d'un gaz, comme de l'air, et de récupération dudit gaz pour sa réutilisation, comprenant au moins des moyens pour alimenter le dispositif en gaz à une pression de pré-soufflage et à deux pressions de soufflage, pour la mise en oeuvre du procédé.

De nombreux problèmes existent dans le domaine des installations de soufflage d'emballages, tels que des bouteilles, en matières synthétiques. Tout d'abord, il est nécessaire de disposer d'un gaz, comme de l'air, à une pression importante de l'ordre de 40 bar pour effectuer le soufflage des emballages dans un moule. Pour comprimer le gaz nécessaire, on se sert de manière classique de compresseurs. Toutefois, selon certains procédés de soufflage, on procède d'abord à un pré-soufflage d'une préforme qui se transformera en emballage puis au soufflage proprement dit. Le pré-soufflage s'effectue à une pression d'environ 10 bar, puis le soufflage atteint une pression de 40 bar. Une première manière d'obtenir ces deux pressions de travail est d'utiliser deux compresseurs, l'un pour générer la pression de 10 bar, et l'autre pour générer la pression de 40 bar. Toutefois, l'utilisation de deux compresseurs est coûteuse à la fois en investissement de départ pour leur achat et en entretien.

Une autre manière de procéder est de n'utiliser qu'un seul compresseur qui comprime le gaz à 40 bar, puis de détendre une partie du gaz comprimé à 10 bar pour l'opération de pré-soufflage. Cette méthode n'est pas non plus très avantageuse puisque l'on gaspille de l'énergie pour comprimer un gaz dont on réduit la pression sans l'avoir utilisé dans le processus de fabrication.

De plus, une fois que l'emballage a été formé par soufflage, le gaz comprimé utilisé (qui est à une pression d'environ 40 bar) est relâché à l'air libre ce qui constitue un gaspillage d'énergie.

Ainsi, il s'est avéré nécessaire de perfectionner les procédés et machines connus pour en améliorer le rendement et réduire ces gaspillages d'énergie.

Des machines et des procédés permettant la fabrication d'emballages, en particulier de bouteilles en PET, par soufflage sont connus dans l'état de la technique. La demande de brevet français 2 662 631, par exemple à laquelle l'on peut se référer, décrit une telle machine et un tel procédé. Selon le procédé décrit on amène une préforme fixée à un distributeur d'air dans un moule, on met le distributeur en liaison avec une source d'air en pression, ledit air s'introduisant dans la préforme de façon à plaquer les parois de la préforme contre les bords du moule, formant ainsi l'emballage désiré. Dans le procédé décrit dans cette demande, on utilise également un vérin d'étirage dont l'action combinée à celle de l'air sous pression permet une autorégulation de l'équilibre entre la déformation axiale et transversale de la préforme ce qui résulte dans un procédé combiné d'étirage et de soufflage. Dans la machine décrite dans cette demande de brevet, l'air en pression soufflé dans la préforme est également utilisé pour actionner le vérin d'étirage. Une fois l'emballage formé, l'air de soufflage est évacué à l'air libre.

La publication antérieure WO 96/25285 décrit un autre procédé de soufflage d'emballages, comme par exemple des bouteilles à partir d'une préforme. Selon le procédé connu, on procède à un pré-soufflage de la préforme à une pression comprise entre 8 à 12 bar, puis on procède au soufflage proprement dit en injectant de l'air à 40 bar. Dans ce document également, le gaz de soufflage est rejeté à l'air libre une fois que l'emballage a été formé.

La demande de brevet EP 0 039 929 décrit un procédé de soufflage d'articles moulés dans lequel le gaz de soufflage est récupéré et recyclé pour être réutilisé. Plus particulièrement, dans cette demande, le gaz de soufflage a également une fonction de traitement de la surface intérieure de l'emballage soufflé, notamment pour améliorer l'imperméabilité de ladite surface intérieure, et, à cet effet, il contient un réactif approprié. Une fois le soufflage/traitement effectués, on récupère le gaz de soufflage pour une réutilisation ultérieure au moyen d'un gaz de purge, ledit gaz de purge devant lui être purifié du réactif utilisé.

Le brevet US 5,173,241 décrit un procédé et un appareil permettant la récupération de l'air de soufflage dans une machine d'injection de matière plastique pour former un emballage. Dans cet état de la technique, l'air soufflé est récupéré dans un conteneur de récupération, une fois le soufflage terminé par aspiration jusqu'à obtenir une pression négative dans l'emballage soufflé.

D'autres dispositifs et procédés de soufflage d'emballages sont connus des publications US 5,648,026, US 5,585,066 et US 3,400,636.

La publication WO 03/009993 décrit encore un autre procédé et un dispositif permettant la récupération de l'air de soufflage. Dans cette machine de soufflage et selon le procédé, les opérations se suivent de la façon suivante:
-) pré-soufflage;
-) soufflage et
-) décharge avec récupération du gaz de soufflage.

Finalement dans le EP-A-1518658 on utilise une première pression pour le pré-soufflage et une deuxième pression pour le soufflage a la fin de la formation de soufflage on effectue un balayage à l'intérieur de l'emballage sous une pression inférieure à la pression de soufflage. A la fin de soufflage, une partie du gaz peut être récupérée dans un volume pour une utilisation subséquente.

Le gaz est récupéré au travers d'une vanne de récupération dans un volume de récupération et est utilisé pour actionner des vérins d'étirage, des consommateurs de la machine de production d'emballages ou renvoyé dans un circuit d'air comprimé de l'usine.

Avec le système de récupération du WO 03/009993, seul le gaz, comme de l'air, de pré-soufflage est fourni par le système de récupération, ceci étant lié au fait que la pression de récupération est supérieure à la pression de pré-soufflage. Cela permet de fournir de l'air, une fois détendu, à la pression de pré-soufflage.

La pression de soufflage étant toujours supérieure à la pression de récupération, il n'est pas possible, a priori, d'utiliser l'air récupéré pour le soufflage.

Un but de l'invention est d'améliorer les dispositifs et procédés connus.

Plus particulièrement, la présente invention a pour but de proposer une machine de soufflage et de récupération du gaz de soufflage d'un fonctionnement simple et facile à ajuster.

Un autre but de l'invention est d'optimiser la récupération de l'air de soufflage dans la machine et diminuer sa consommation en énergie et la maintenance nécessaire.

Un autre but de l'invention est de d'améliorer le recyclage du gaz de soufflage.

Dans la présente invention, l'on propose d'utiliser le gaz récupéré, par exemple de l'air, uniquement pour les opérations de pré-soufflage et de soufflage et non pas pour d'autres utilisations comme l'enseigne l'état de la technique.

Le procédé selon l'invention comprend les étapes suivantes:
-) pré-soufflage du gaz à une première pression (P1);
-) soufflage du gaz à une deuxième pression (P2) supérieure à la première pression (P1);
-) récupération du gaz dans un volume de récupération jusqu'à l'obtention d'une pression prédéterminée dans l'emballage; et il est caractérisé par les étapes suivantes :
-) soufflage du gaz à une troisième pression (P3) supérieure à a la deuxième pression (P2) avant l'étape de
-) récupération du gaz dans un volume de récupération jusqu'à l'obtention d'une pression prédéterminée dans l'emballage ou pendant un temps prédéterminé et utilisation du gaz récupéré pour effectuer les opérations de pré-soufflage et la première étape de soufflage;
-) détente à l'air libre du gaz résiduel dans l'emballage pendant et après la phase de récupération.

Ainsi, dans le système de récupération selon l'invention, on fournit du gaz récupéré à la fois pour l'opération de pré-soufflage et pour une partie de l'opération de soufflage. En effet, pour cette partie de l'opération de soufflage, la pression du gaz de soufflage sera au maximum égale à la pression de récupération. Puis, on fournit "un appoint" de gaz de soufflage à haute pression pour atteindre la pression de soufflage désirée.

En d'autres termes, la pression de pré-soufflage est obtenue de façon similaire à WO 03/009993, ensuite à la fin du pré-soufflage, une première vanne de soufflage s'ouvre et l'air utilisé pour la première phase de soufflage est celui contenu dans un réservoir de récupération. Une fois une pression prédéterminée de soufflage atteinte dans l'emballage, ou après un certain temps, on ouvre une deuxième vanne de soufflage et la pression dans l'objet soufflé augmente pour atteindre la pression finale nécessaire pour former l'objet en question.

L'avantage du procédé et du système selon l'invention réside dans le fait que la quantité d'air, ou de gaz de soufflage, fournie par le système de récupération est utilisée non seulement pour le pré-soufflage mais aussi pour effectuer une partie du soufflage. Il en résulte une meilleure utilisation de l'air récupéré, qui n'est pas détendu à une pression inférieure pour être recyclé par exemple dans le réseau de l'usine ou pour actionner des outils d'étirage, de même qu'une diminution de la quantité d'air haute pression nécessaire pour atteindre la pression finale déterminée, puisqu'au lieu de passer de la pression de pré-soufflage à la pression de soufflage finale, on passe par une étape intermédiaire de soufflage, après le pré-soufflage, qui est générée par du gaz récupéré.

Un autre avantage réside dans le fait que l'on peut installer l'invention sur des machines existantes ce qui diminue aussi les coûts de la modification.

Typiquement, les valeurs de pression selon l'invention à envisager sont:
-) première pression, pour pré-soufflage, entre 4 à 16 bar (P1);
-)deuxième pression, pour première phase de soufflage (pression de récupération),: environ 18 bar (P2 = maximum de la pression de récupération)
-) troisième pression, phase de soufflage finale, environ de 30 à 40 bar (P3).

Comme on le voit clairement, auparavant, il était nécessaire de fournir du gaz de soufflage sous pression pour passer de la pression de pré-soufflage P1 à la pression finale P3. Ce gaz était obtenu par l'utilisation de compresseurs haute pression très coûteux à l'achat et à l'entretien.

Avec le système selon l'invention, il n'est nécessaire que de faire un "appoint" entre la première phase de soufflage, cet état étant obtenu uniquement avec du gaz récupéré, et la pression finale de l'ordre de 30 à 40 bar. Dans une installation donnée, cela permet une réduction de la consommation électrique, voire du nombre de compresseurs utilisés, d'où une économie importante.

Le procédé de soufflage selon l'invention, au moyen d'un gaz d'un emballage dans un moule à partir d'une préforme et de récupération du gaz de soufflage, comporte au moins les étapes suivantes:
-) pré-soufflage à une première pression du gaz dans la préforme;
-) soufflage à une deuxième et une troisième pression du gaz dans la préforme pour obtenir l'emballage;
-) récupération du gaz à la deuxième pression jusqu'à l'obtention d'une pression
prédéterminée dans l'emballage;
-) maintien du gaz récupéré à une pression de récupération;
-) détente à l'air libre du gaz résiduel dans l'emballage
-) utilisation du gaz récupéré pour effectuer le pré-soufflage et pour effectuer une première étape de soufflage.

L'étape de pré-soufflage dure entre 0,1 s et 0,3s.

L'étape de soufflage à la deuxième pression dure jusqu'à 0,3s.

L'étape de soufflage à la troisième pression dure entre 0,2s et 2s.

L'invention propose aussi un dispositif pour la mise en oeuvre du procédé destiné au soufflage d'emballages en particulier de bouteilles, dans un moule à partir d'une préforme, au moyen d'un gaz et de récupération dudit gaz, comprenant au moins des moyens pour alimenter le dispositif en gaz à une première pression et à une troisième pression, des moyens d'étirage des moyens de formage de l'emballage, des moyens de récupération dudit gaz comprenant au moins un volume de récupération associé à une vanne de récupération, des moyens de commande desdits moyens de récupération et de ladite vanne et des moyens d'ajustage permettant de régler le fonctionnement desdits moyens de commande, caractérisé par le fait que le dispositif comprend en outre des moyens d'alimentation de soufflage à une deuxième pression de soufflage à partir dudit volume de récupération.

Selon une exécution ledit dispositif est caractérisé en ce que les moyens d'alimentation de soufflage à une deuxième pression de soufflage à partir dudit volume de récupération comprennent une vanne et un conduit.

L'invention sera mieux comprise par la description de modes d'exécution de celle-ci est des figures qui s'y rapportent.
La figure 1 montre un schéma de principe d'une machine connue de l'état de la technique.
La figure 2 montre de façon schématique une courbe de soufflage selon le procédé de invention.
La figure 3 montre un schéma-bloc du procédé selon l'invention.
La figure 4 montre une machine de soufflage selon l'invention.

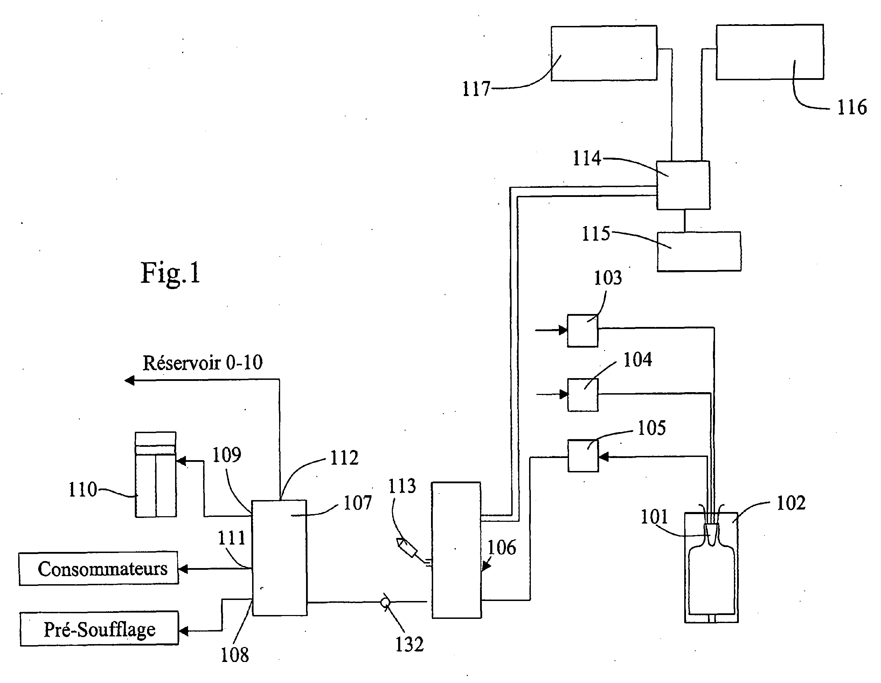

Le principe d'une machine de soufflage est tout d'abord décrit en référence à la figure 1. Dans cette figure, la machine de soufflage est une machine connue en soi dans l'état de la technique et telle que décrite dans la publication WO 03/009993. Dans cette machine, comme indiqué ci-dessus, on apporte un gaz, par exemple de l'air, à une première pression, dite pression de pré-soufflage comprise entre 4 à 16 bar, pour le pré-soufflage d'une préforme 101 dans le moule 102 au travers d'une vanne de pré-soufflage 103, puis on amène le gaz à une seconde pression, dite pression de soufflage de l'ordre de 25 à 40 bar, pour le soufflage de l'emballage lui-même dans le moule 102, au travers d'une vanne de soufflage 104. La pression de soufflage dépend notamment de la complexité de l'emballage à souffler: plus la forme est simple et sans détails particuliers et plus la pression de soufflage peut être faible. Une fois que l'emballage a été soufflé, le gaz dans l'emballage qui est à la pression de soufflage, est récupéré au travers d'une vanne de décharge 105 et d'une vanne de récupération 106 dans un volume de récupération 107. Ce volume de récupération 107 peut être constitué par un réservoir ou plusieurs réservoirs ou encore un conduit d'un volume approprié qui fait office de réservoir. Pour ne pas ralentir le cycle de production de la machine, seule une partie du gaz à la pression de soufflage est récupérée, le restant du gaz étant évacué par un échappement silencieux 113 de la vanne 106 à l'air libre.

Dans les machines connues, on récupère le gaz de soufflage jusqu'à ce qu'il atteigne une pression d'environ 17 bar dans l'emballage soufflé, le restant de la détente s'opérant à l'air libre au travers de l'échappement 113.

Dans l'état de la technique, ce gaz récupéré est alors recyclé pour différents usages. Un premier usage qui peut être fait est de réutiliser ce gaz sous pression pour effectuer l'opération de pré-soufflage. Ainsi, le volume de récupération peut être relié d'une part au circuit de pré-soufflage ce qui est schématisé par l'expression "pré-soufflage" et la sortie 108, par exemple dans un réservoir de pré-soufflage, non représenté dans la figure, qui serait situé avant la vanne de pré-soufflage 103 dans le circuit de la machine. En fonction de la pression moyenne de récupération obtenue et de la pression de pré-soufflage à laquelle fonctionne la machine, il sera nécessaire d'interposer un détendeur entre le volume de récupération 107 et le réservoir de pré-soufflage afin de détendre le gaz recyclé à la pression effective de pré-soufflage. Ces paramètres dépendent souvent de la machine de production et doivent être ajustés au cas par cas.

Un deuxième usage dont il peut être fait du gaz récupéré est pour actionner des vérins d'étirage 110 de la préforme. Comme indiqué plus haut, on combine en général à la fois le pré-soufflage et/ou le soufflage avec un étirement longitudinal de la préforme 101 au moyen dudit vérin d'étirage 110 afin de combiner une déformation transversale et axiale de la préforme. Ces vérins sont soit actionné mécaniquement par une came, soit au moyen d'un gaz à une pression comprise entre environ 7 à 10 bar. Ainsi, le volume peut être également relié au circuit de commande des vérins d'étirage 110, éventuellement au travers d'un détendeur (non-représenté) pour amener le gaz à la pression utilisée pour l'actionnement des vérins 110. Cet usage est schématisé par la sortie 109 du volume de récupération 107 et le vérin 110.

Un troisième usage du gaz récupéré est pour actionner d'autres éléments consommateurs de la machine de soufflage, ce qui est schématisé par le mot "consommateurs" dans la figure 1 et la sortie 111 du volume de récupération 107.

Un quatrième usage qui peut être fait du gaz récupéré est de le renvoyer dans les conduites communes d'alimentation en gaz, notamment en air, des locaux dans lesquels de telles machines sont installées et aussi pour alimenter le compresseur de la machine de soufflage effectuant la compression à 40 bar du gaz. En effet, de tels locaux industriels utilisent toujours du gaz en pression pour actionner des machines et dispositifs divers de sorte que du gaz sous pression est toujours utile. Cet usage est schématisé par la sortie 112 du volume de récupération et par l'expression "Réservoir 0-10" de la figure 1.

Dans le procédé de soufflage connu, on trouve les étapes suivantes (en référence à la figure 1):
-) on ouvre la vanne 103 de pré-soufflage, on effectue le pré-soufflage à une première pression du gaz (par exemple entre 4 et 16 bar) dans la préforme 101 et on ferme la vanne 103;
-) on ouvre la vanne 104, on effectue le soufflage à une deuxième pression du gaz (par exemple entre 25 et 40 bar) dans la préforme pour obtenir l'emballage et on ferme la vanne de soufflage 104;
-) on ouvre la vanne de décharge 105 et on récupère le gaz à la deuxième pression dans un volume de récupération 107 au travers de la vanne de récupération 106 jusqu'à l'obtention d'une troisième pression prédéterminée dans l'emballage soufflé;
-) dès que la troisième pression prédéterminée est atteinte, on ferme la vanne de récupération 106 et le reste du gaz de soufflage encore sous pression dans l'emballage est rejeté à l'air libre.

Ensuite, l'emballage soufflé est retiré de la machine de soufflage et continue son cycle de production.

Comme indiqué ci-dessus, dans le procédé selon l'invention, l'on conserve le gaz récupéré pour deux usages: le pré-soufflage et une partie du soufflage. A cet effet, on récupère la gaz de soufflage jusqu'à obtenir une pression de l'ordre de 20 bar dans le volume de récupération afin de pouvoir réutiliser ce gaz pour une partie du soufflage, sans le perdre pour d'autres usage contrairement à ce qui est enseigné dans l'état de la technique.

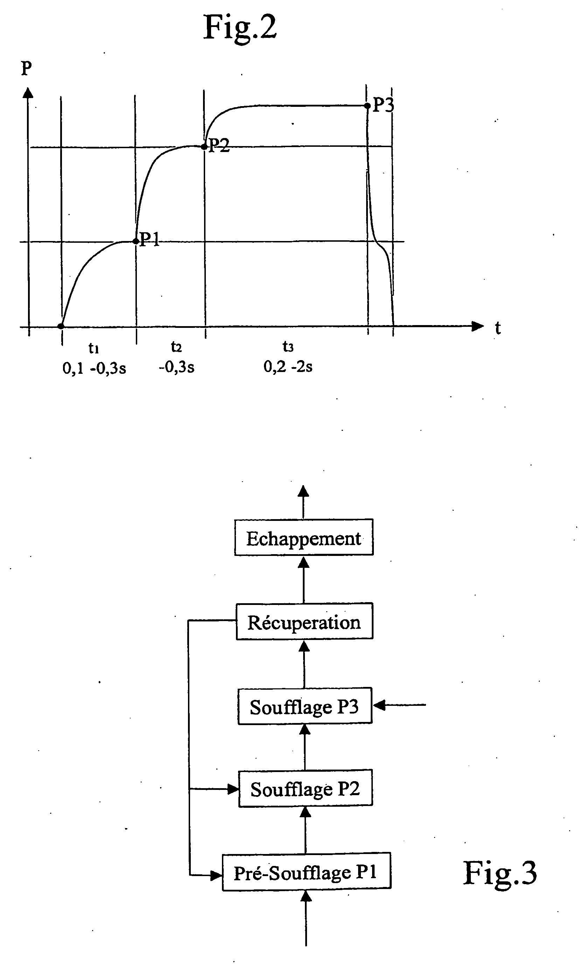

Le procédé selon l'invention est schématisé à la figure 2 sous forme de graphique dans lequel l'on a représenté la courbe de soufflage pression/temps d'une machine selon l'invention et dans le schéma-bloc de la figure 3.

Tout d'abord, l'on démarre le procédé par le pré-soufflage comme décrit ci-dessus jusqu'à obtenir une pression P1 de l'ordre de 4 à 16 bar dans l'emballage. Cette étape dure en général environ t1 = 0,1 à 0,3 s.

Puis, une fois que cette étape est effectuée, on effectue une première partie du soufflage jusqu'à obtenir une pression P2 de l'ordre de 20 bar avec du gaz récupéré fourni par un volume de récupération. Cette étape dure en général au maximum t2 = 0,3s. L'on peut choisir de terminer cette étape soit lorsqu'une pression déterminée (par exemple 20 bar) est atteinte, ou au bout d'un certain temps.

Enfin, l'on termine le soufflage de l'emballage en fournissant du gaz sous haute pression pour arriver à la pression finale P3 de soufflage de l'ordre de 36 à 40 bar. Cette troisième étape dure généralement environ t3 = 0,2s - 2s.

Une fois la pression de soufflage P3 obtenue, ou après un certain temps, l'on procède à la décharge du gaz présent dans l'emballage et à sa récupération par les moyens de récupération tels que décrits dans la demande WO 03/009993 pour son utilisation comme gaz de soufflage, de la façon décrite ci-dessus.

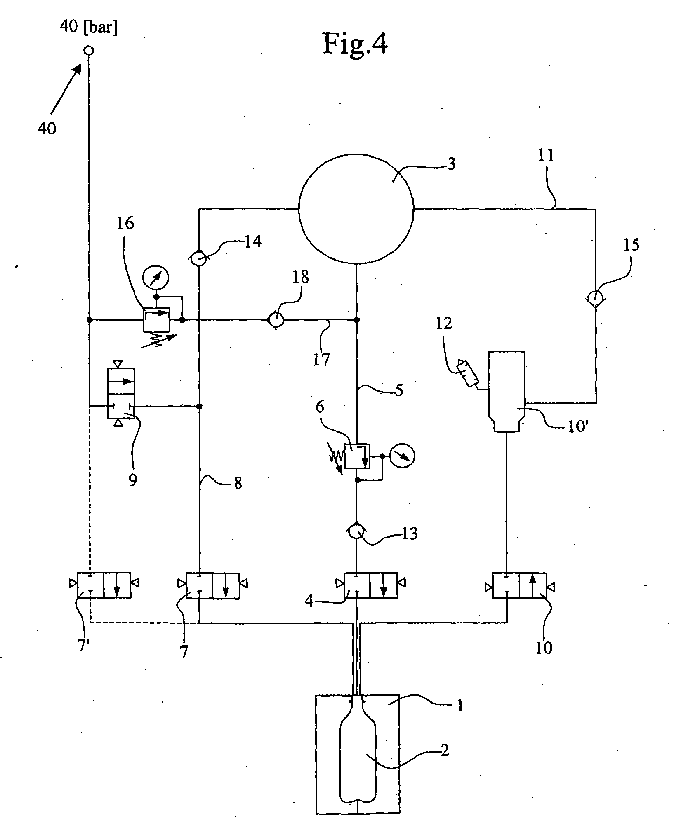

La machine de soufflage permettant la mise en oeuvre du procédé selon l'invention est maintenant décrite en référence à la figure 4.

Cette machine comprend un moule 1 dans lequel se trouve l'emballage 2 qui est formé par soufflage, un volume de récupération 3 dans lequel le gaz de soufflage est récupéré et une alimentation haute pression 4 de gaz. Dans la description qui suit, l'on considérera que la machine est en fonction et que le volume de récupération contient du gaz sous pression. Pour le pré-soufflage, une vanne de pré-soufflage 4 est ouverte et le gaz contenu dans le volume 3 s'écoule par le conduit 5 au travers d'un détendeur 6 dans la préforme qui deviendra l'emballage 2.

Quand l'opération de pré-soufflage est terminée, on ferme la vanne de pré-soufflage 4 et on ouvre une première vanne de soufflage 7 qui permet au gaz contenu dans le volume 3 de s'écouler par le conduit 8 sans passer par un détendeur dans l'emballage partiellement soufflé qui deviendra l'emballage 2. Une fois cette première partie de soufflage terminée, l'on ouvre la vanne de soufflage 9 et le gaz à haute pression (par exemple à 40 bar) est soufflé dans l'emballage partiellement soufflé qui deviendra l'emballage 2 depuis l'alimentation 40.

Quand l'opération de soufflage est terminée, l'on ferme les vannes 7 et 9 et l'on ouvre la vanne d'échappement 10 et la vanne de récupération 10' ce qui permet la récupération du gaz de soufflage dans le volume de récupération 3 par le conduit 11, de la façon décrite dans la publication WO 03/009993. Une fois la pression diminuée à la valeur requise dans l'emballage 2 ou après un certain temps, le reste de l'évacuation s'effectue à l'air libre par le silencieux 12.

Les conduits 5, 8, 11 comprennent également les vannes anti-retour 13, 14 et 15 afin de bloquer le passage du gaz de soufflage de façon appropriée, et en cas de fonctionnement non-simultané des vannes.

Pour le démarrage de la machine, lorsque le volume de récupération 3 ne contient pas de gaz de soufflage récupéré en pression suffisante, ou lorsque le système de récupération n'est pas en fonction, l'alimentation pour les opérations de pré-soufflage et soufflage se fait directement depuis l'alimentation haute pression 4, au travers d'un détendeur 16 qui est relié au conduit 5 par le conduit 17. Ce conduit 17 comprend également un anti-retour 18. Cette manière de procéder permet de mettre en pression le système complet ou de maintenir la machine en fonction même si la récupération n'est pas utilisée. La pression à la sortie du détendeur est de l'ordre de 8 bar, ce qui permet d'obtenir une pression de l'ordre de 7 bar à la sortie du détendeur 6, nécessaire pour effectuer le pré-soufflage. Dans un tel mode de fonctionnement, le soufflage est effectué en une seule opération.

Puis, quand la machine est en fonction, le système de récupération, en particulier le volume de récupération 3 monte en pression au cours des cycles et peu à peu la pression dans le volume de récupération est suffisante pour permettre la première partie du soufflage telle que décrite ci-dessus.

Dans la figure 4, les vannes 7 et 9 pour le soufflage à une pression intermédiaire et à une pression finale sont représentées en série. Dans une variante, représente en traits tiretés, ces vannes 7 et 9 peuvent aussi être placées en parallèle.

En principe, les différentes vannes du système ont un fonctionnement simultané. Ces vannes sont de type standard telles que connues dans l'état de la technique. De plus, la vanne 10' peut être une vanne telle que décrite dans la publication WO 03/009993.

Ces vannes sont commandées par des moyens mécaniques connus en eux-mêmes comprenant par exemples une came actionnant un distributeur qui commande la position de ladite vanne.

Ces moyens de commandes peuvent être mécaniques et/ou associés à des moyens électriques et à des capteurs.

De façon similaire, les moyens d'étirage et les moyens de formage de l'emballage à partir de la préforme sont connus en eux-mêmes de l'état de la technique concerné.

Bien entendu, les modes de réalisation décrits ci-dessus sont donnés à titre d'exemple non-limitatifs et des variations sont possibles dans le cadre de la protection revendiquée au moyen d'équivalents.

Par exemple, les pressions indiquées pour le pré-soufflage et le soufflage peuvent varier par rapport aux valeurs données. Pour le présoufflage, on peut envisager des valeurs de l'ordre de 4 à 16 bar, pour le soufflage à la pression P1 des valeurs de l'ordre de 14 à 22 bar et pour le soufflage à la pression P3 des valeurs de l'ordre de 30 à 40 bar.

## Revendications

1. Procédé de soufflage au moyen d'un gaz d'un emballage dans un moule à partir d'une préforme et de récupération du gaz de soufflage selon les étapes suivantes:
-) pré-soufflage du gaz à une première pression (P1);
-) soufflage du gaz à une deuxième pression (P2) supérieure à la première pression (P1);
-) récupération du gaz dans un volume de récupération jusqu'à l'obtention d'une pression prédéterminée dans l'emballage;
-) détente à l'air libre du gaz résiduel dans l'emballage pendant et après la phase de récupération; **caractérisé par** les étapes suivantes :
-) soufflage du gaz à une troisième pression (P3) supérieure à la deuxième pression (P2) avant l'étape de
récupération du gaz dans un volume de récupération jusqu'à l'obtention d'une pression prédéterminée dans l'emballage ou pendant un temps prédéterminé et utilisation du gaz récupéré pour effectuer les opérations de pré-soufflage et la première étape de soufflage

2. Procédé selon la revendication 1, **caractérisé en ce que** la première pression vaut entre 4 et 16 bar, la deuxième pression vaut environ 18 bar et la troisième pression vaut environ entre 30 et 40 bar.

3. Procédé selon l'une des revendications 1 ou 2, **caractérisé en ce que** l'étape de pré-soufflage dure entre 0,1 s et 0,3s.

4. Procédé selon l'une des revendications 1 à 3, **caractérisé en ce que** l'étape de soufflage à la deuxième pression dure jusqu'à 0,3s.

5. Procédé selon l'une des revendications 1 à 4, **caractérisé en ce que** l'étape de soufflage à la troisième pression dure entre 0,2s et 2s.

6. Dispositif pour la mise en oeuvre du procédé selon l'une des revendications précédentes, destiné au soufflage d'emballages (2), en particulier de bouteilles, dans un moule (1) à partir d'une préforme, au moyen d'un gaz et de récupération dudit gaz, comprenant au moins des moyens (3,4,5,6,8,9,40) pour alimenter le dispositif en gaz à une première pression (P1) et à une troisième pression (P3), des moyens d'étirage des moyens de formage de l'emballage (2), des moyens de récupération (3,10,10', 11) dudit gaz comprenant au moins un volume de récupération (3) associé à une vanne de récupération (10'), des moyens de commande desdits moyens de récupération et de ladite vanne et des moyens d'ajustage permettant de régler le fonctionnement desdits moyens de commande, **caractérisé par le fait que** le dispositif comprend en outre des moyens d'alimentation de soufflage (3,7,8) à une deuxième pression (P2) de soufflage à partir dudit volume de récupération (3).

7. Dispositif selon la revendication 6, **caractérisé en ce que** les moyens d'alimentation de soufflage à une deuxième pression de soufflage (P2) à partir dudit volume de récupération (3) comprennent une vanne (7) et un conduit (8).

## Claims

1. A method for blow-molding a packaging container by means of a gas in a mold starting from a preform and for recovering the blow-molding gas according to the following steps:
-) pre-mold blowing of the gas under a first pressure (P1) ;
-) blow-mold blowing of the gas under a second pressure (P2) higher than the first pressure (P1);
-) recovery of the gas in a recovery volume until a pre-determined pressure is reached in the container;
-) release into the open air of the residual gas in the container during and after the recovery phase; **characterized by** the following steps:
-) blow-mold blowing of the gas under a third pressure (P3) higher than the second pressure (P2) before the step for
recovering the gas in a recovery volume until a pre-determined pressure is reached in the container or for a pre-determined time and use of the recovered gas for carrying out the pre-molding and the first blow-molding step operations.

2. The method as claimed in claim 1, **characterized in that** the first pressure value is between 4 and 16 bar, the second pressure value is around 18 bar and the third pressure value is between around 30 and 40 bar.

3. The method as claimed in either of claims 1 and 2, **characterized in that** the pre-molding step lasts for between 0.1s and 0.3 s.

4. The method as claimed in one of claims 1 to 3, **characterized in that** the blow-molding step under the second pressure lasts for up to 0.3 s.

5. The method as claimed in one of claims 1 to 4, **characterized in that** the blow-molding step under the third pressure lasts for between 0.2 s and 2 s.

6. A device for implementing the method as claimed in one of the preceding claims, designed for the blow-molding of packaging containers (2), in particular bottles, in a mold (1) starting from a preform, by means of a gas and of recovery of said gas, comprising at least means (3,4,5,6,8,9,40) for supplying the device with gas under a first pressure (P1) and under a third pressure (P3), means for extruding from the container forming means (2), means for recovering (3,10,10',11) said gas comprising at least one recovery volume (3) associated with a recovery valve (10'), means for controlling said recovery means and said valve and adjustment means allowing the operation of said control means to be adjusted, **characterized in that** the device also comprises means (3,7,8) for blow-molding supply under a second blow-molding pressure (P2) from said recovery volume (3).

7. The device as claimed in claim 6, **characterized in that** the means for blow-molding supply under a second blow-molding pressure (P2) from said recovery volume (3) comprise a valve (7) and a conduit (8).

## Patentansprüche

1. Verfahren zum Gasblasformen einer Verpackung in einer Form, ausgehend von einer Preform unter Rückgewinnung des Blasgases, mit den folgenden Schritten:
- Vorblasen mit dem Gas unter einem ersten Druck (P1);
- Formblasen mit dem Gas unter einem zweiten Druck (P2), der höher als der erste Druck (P1) ist;
- Rückgewinnung des Gases in einem Rückgewinnungsvolumen bis zum Aufbau eines vorbestimmten Drucks in der Verpackung; und
- Entspannen des Restgases in der Verpackung während und nach der Rückgewinnungsphase;
**gekennzeichnet durch** folgende Schritte:
- Formblasen mit dem Gas unter einem dritten Druck (P3), der höher als der zweite Druck (P2) ist, vor dem Schritt der Rückgewinnung des Gases in einem Rückgewinnungsvolumen bis zum Aufbau eines vorbestimmten Drucks in der Verpackung oder während einer vorbestimmten Zeitdauer, und Verwendung des zurückgewonnenen Gases zur Ausführung des Vorblasens und des ersten Formblasschrittes.

2. Verfahren nach Anspruch 1, **dadurch gekennzeichnet, dass** der erste Druck zwischen 4 und 16 bar liegt, der zweite Druck etwa 18 bar beträgt und der dritte Druck zwischen etwa 30 und 40 bar liegt.

3. Verfahren nach Anspruch 1 oder 2, **dadurch gekennzeichnet, dass** der Schritt des Formblasens mit dem Gas zwischen 0,1 und 0,3 sec dauert.

4. Verfahren nach einem der Ansprüche 1 bis 3, **dadurch gekennzeichnet, dass** das Formblasen unter einem zweiten Druck bis zu 0,3 sec dauert.

5. Verfahren nach einem der Ansprüche 1 bis 4, **dadurch gekennzeichnet, dass** das Formblasen unter dem dritten Druck zwischen 0,2 und 2 sec dauert.

6. Vorrichtung zur Ausführung des Verfahrens nach einem der vorstehenden Ansprüche, ausgerichtet auf das Formblasen von Verpackungen (2), insbesondere von Flaschen, in einer Form (1), ausgehend von einer Preform, mittels eines Gases und unter Rückgewinnung dieses Gases, wobei die Vorrichtung mindestens Mittel (3, 4, 5, 6, 8, 9, 40) zur Versorgung mit einem Gas unter einem ersten Druck (P1) und unter einem dritten Druck (P3) aufweist, weiterhin Mittel zum Ausziehen der Formmittel aus der Verpackung (2), Mittel zur Rückgewinnung (3, 10, 10', 11) des genannten Gases mit mindestens einem Rückgewinnungsvolumen (3), dem ein Rückgewinnungsventil (10') zugeordnet ist, Mittel zur Steuerung der genannten Rückgewinnungsmittel und des genannten Ventils sowie Mittel zur Einstellung des Betriebs der genannten Steuermittel, **dadurch gekennzeichnet, dass** die Vorrichtung weiterhin Mittel (3, 7, 8) zur Erzeugung eines zweiten Formblasdruckes (P2) ausgehend vom genannten Rückgewinnungsvolumen (3) aufweist.

7. Vorrichtung nach Anspruch 6, **dadurch gekennzeichnet, dass** die Mittel zur Versorgung der Vorrichtung mit einem zweiten Blasdruck (P2), ausgehend vom genannten Rückgewinnungsvolumen (3), ein Ventil (7) und eine Leitung (8) aufweisen.
